# EUROPEAN PATENT APPLICATION

(11) **EP 4 559 956 A1**
(43) Date of publication of application: **28.05.2025**
(21) Application number: 24212872.6
(22) Date of filing: 14.11.2024
(51) Int. Cl.: C08J 5/22

(54) **MONOLITHIC BIPOLAR MEMBRANE WITH LOW TRANSMEMBRANE VOLTAGE AND PREPARATION METHOD THEREOF**

(30) Priority: 22.11.2023 CN 202311564174
(71) Applicant: Hangzhou Lanran Technology Co., Ltd, Hangzhou City, Zhejiang 310012 (CN)
(72) Inventor: QING, Bo, Hangzhou City, Zhejiang Province (CN); LIAO, Qiao, Hangzhou City, Zhejiang Province (CN); LOU, Zhao, Hangzhou City, Zhejiang Province (CN)
(74) Representative: Balder IP Law, S.L.

(57) **Abstract**

The present invention relates to a monolithic bipolar membrane with a low transmembrane voltage and a preparation method thereof. The preparation method includes the following steps: preparing a membrane liquid with styrene and divinylbenzene; heating the membrane liquid, and then impregnating a polyolefin thin membrane; polymerizing an impregnated thin membrane and preparing a basement membrane; producing the basement membrane into a semi-anion membrane; additionally partially sulfonating and additionally quaternizing one side of the semi-anion membrane; then, soaking the bipolar membrane in a FeCl₂ solution, transforming the bipolar membrane in an alkaline solution, and preparing the bipolar membrane. The present invention effectively reduces the transmembrane voltage, thereby being beneficial to reducing energy consumption.

## Description

### FIELD OF THE INVENTION

The present invention pertains to the technical field of bipolar membranes, in particular refers to a monolithic bipolar membrane with a low transmembrane voltage and a preparation method thereof.

### BACKGROUND OF THE INVENTION

A bipolar membrane is a composite membrane formed by bonding a cation exchange membrane and an anion exchange membrane, which has the function of generating a phenomenon called hydrolysis: by applying a voltage to both sides of the bipolar membrane immersed in an aqueous solution, the water in the membrane is dissociated into a proton and a hydroxyl. Using this function, bipolar membranes, cation exchange membranes and anion exchange membranes are combined to carry out electrodialysis, by which, for example, acids and bases can be produced from neutral salts.

The transmembrane voltage of the existing bipolar membrane is high, leading to high energy consumption while being more likely to result in failures such as membrane burning; based on this, there is an urgent need in the field to find a technology to reduce the transmembrane voltage of a bipolar membrane in order to save energy consumption.

### SUMMARY OF THE INVENTION

Based on the above-mentioned shortcomings and deficiencies in the prior art, one of the purposes of the present invention is to at least solve one or more of the above-mentioned problems in the prior art. In other words, one of the purposes of the present invention is to provide a monolithic bipolar membrane with a low transmembrane voltage and a preparation method thereof, which meets one or more of the aforementioned requirements.

In order to achieve the purposes of the present invention described above, the present invention adopts the following technical schemes:

A preparation method of a monolithic bipolar membrane with a low transmembrane voltage, including the following steps:
(1) prepolymerizing styrene, divinylbenzene and an initiator at a first temperature, cooling prepolymers to stop reaction when the prepolymers start to form a jelly shape, and preparing a membrane liquid;
(2) heating the membrane liquid to be under a liquid state, at which time infiltrating and impregnating a polyolefin thin membrane in the membrane liquid, and taking out an impregnated thin membrane from an organic mixture after being impregnated for a certain time;
(3) putting the impregnated thin membrane into water at a second temperature for a polymerization reaction, so as to prepare a basement membrane after the polymerization reaction is completed;
(4) chloromethylating the basement membrane, aminating one side of the basement membrane and preparing a semi-anion membrane;
(5) partially sulfonating an aminated side of the semi-anion membrane additionally, and controlling a sulfonation reaction condition so that a certain amount of tertiary amine groups with abilities to catalyze hydrolytic dissociation are present in both of a cation layer and at an interface between an anion layer and the cation layer of the membrane after the sulfonation is completed;
(6) quaternizing one side of the membrane treated in the step (5) additionally, and grafting all unreacted parts in the membrane with a quaternary ammonium group, so that the reacted membrane has a property of a bipolar membrane; and
(7) soaking the bipolar membrane treated in the step (6) in a FeCl₂ solution additionally, and after soaking for a certain time, taking out the membrane, soaking and transforming the membrane in an alkaline solution, and preparing the monolithic bipolar membrane.

Preferably, in the step (1), the prepolymerization has a temperature of 60-80°C and time of 0.3-1.5 h.

Preferably, in the step (1), a determination condition that the prepolymers start to form the jelly shape is that a viscosity is 200-500 dPa·s.

Preferably, in the step (2), the membrane liquid has a heating temperature of 60-80°C, and impregnation time of 5-30 min.

Preferably, in the step (3), the polymerization reaction has a temperature of 60-80°C, and time of 4-10 h.

Preferably, in the step (4), the basement membrane is soaked in chloromethyl ether, heated to 30-45°C, and reacted for 2-8 h with SnCl₄ as a catalyst, then the reacted membrane is taken out, and the residual chloromethylation solution is washed with water for later use;
one side of the washed membrane is soaked in a 5-10 wt% dimethylamine solution, aminated for 1.5-4 h, and then washed with clear water additionally to be neutral to obtain the semi-anion membrane.

Preferably, in the step (5), after the semi-anion membrane is dried at a low temperature, the aminated side is reacted with sulfuric acid, heated to 50-80°C, and reacted for 1-4 h, so that an anion membrane is partially sulfonated.

Preferably, in the step (6), a quaternization temperature is 20-40°C.

Preferably, in the step (7), the FeCl₂ solution has a concentration of 0.5-5 wt%, a transformation temperature of 25-60°C and transformation time of 5-30 min.

The present invention also provides a monolithic bipolar membrane prepared by the preparation method as described in any scheme above.

Compared with the prior art, the present invention has the beneficial effects as follows:

Compared with the existing bipolar membrane, the monolithic bipolar membrane of the present invention effectively reduces the transmembrane voltage, which can reach 1.15 V at the lowest, and has a stable transmembrane voltage, thereby being beneficial to reducing energy consumption.

### DETAILED DESCRIPTION OF THE INVENTION

The monolithic bipolar membrane provided by the present invention and the preparation method thereof will be further described below.

A preparation method of a monolithic bipolar membrane is provided in the present invention, including: prepolymerizing styrene, divinylbenzene and an initiator which are raw materials at a certain temperature, cooling prepolymers to stop reaction when the mixture above starts to form a jelly shape and preparing a membrane liquid; heating the membrane liquid to be under a liquid state, at which time infiltrating and impregnating a polyolefin thin membrane in the membrane liquid, and taking out the impregnated thin membrane from the organic mixture after being impregnated for a certain time; putting the impregnated thin membrane prepared into water at a certain temperature for a polymerization reaction, so as to prepare a basement membrane after the polymerization reaction is completed; chloromethylating the basement membrane; aminating one side of the chloromethylated membrane with dimethylamine and preparing a semi-anion membrane; partially sulfonating the aminated side of the semi-anion membrane additionally, and controlling a sulfonation reaction condition so that a certain amount of tertiary amine groups with abilities to catalyze hydrolytic dissociation are present in both of a cation layer and at an interface between an anion layer and the cation layer of the membrane after the sulfonation is completed; then quaternizing one side additionally, and grafting all unreacted parts in the membrane with a quaternary ammonium group, at which time the reacted membrane has a property of a bipolar membrane; and soaking the bipolar membrane in a FeCl₂ solution additionally, and after soaking for a certain time, taking out the membrane, soaking and transforming the membrane in an alkaline solution, at which time, not only tertiary amine groups but also Fe²⁺ with the ability to catalyze hydrolytic dissociation exchanged are present in the cation layer and at the interface, thus making the hydrolysis voltage (i.e., transmembrane voltage) of the bipolar membrane lower, so as to prepare the monolithic bipolar membrane with a lower hydrolysis voltage.

Specifically, a preparation method of a monolithic bipolar membrane with a low transmembrane voltage is provided, including the following steps:
(1) prepolymerizing styrene, divinylbenzene and an initiator, cooling prepolymers to stop reaction when the prepolymers start to form a jelly shape, and preparing a membrane liquid;
(2) heating the membrane liquid to be under a liquid state, at which time infiltrating and impregnating a polyolefin thin membrane in the membrane liquid, and taking out the impregnated thin membrane from the organic mixture after being impregnated for a certain time;
(3) putting the impregnated thin membrane into water at a second temperature for a polymerization reaction, so as to prepare a basement membrane after the polymerization reaction is completed;
(4) chloromethylating the basement membrane, aminating one side of the basement membrane and preparing a semi-anion membrane;
(5) partially sulfonating the aminated side of the semi-anion membrane additionally, and controlling a sulfonation reaction condition so that a certain amount of tertiary amine groups with abilities to catalyze hydrolytic dissociation are present in both of a cation layer and at an interface between an anion layer and the cation layer of the membrane after the sulfonation is completed;
(6) quaternizing one side of the membrane treated in the step (5) additionally, and grafting all unreacted parts in the membrane with a quaternary ammonium group, so that the reacted membrane has a property of a bipolar membrane; and
(7) soaking the bipolar membrane treated in the step (6) in a FeCl₂ solution additionally, and after soaking for a certain time, taking out the membrane, soaking and transforming the membrane in an alkaline solution, and preparing the monolithic bipolar membrane.

In one example, in the step (1) above, the prepolymerization has a temperature of 60-80°C and time of 0.3-1.5 h.

In one example, in the step (1) above, a determination condition that the prepolymers start to form the jelly shape is that a viscosity is 200-500 dPa·s.

In one example, in the step (2) above, the membrane liquid has a heating temperature of 60-80°C, and impregnation time of 5-30 min.

In one example, in the step (3) above, the polymerization reaction has a temperature of 60-80°C, and time of 4-10 h.

In one example, in the step (4) above, the basement membrane is soaked in chloromethyl ether, heated to 30-45°C, and reacted for 2-8 h with SnCl₄ as a catalyst, then the reacted membrane is taken out, and the residual chloromethylation solution is washed with water for later use;
one side of the washed membrane is soaked in a 5-10 wt% dimethylamine solution, aminated for 1.5-4 h, and then washed with clear water additionally to be neutral to obtain the semi-anion membrane.

In one example, in the step (5) above, after the semi-anion membrane is dried at a low temperature (the drying temperature is 40-50°C), the aminated side is reacted with sulfuric acid (the concentration of sulfuric acid is 95-98%), heated to 50-80°C, and reacted for 1-4 h, so that the anion membrane is partially sulfonated.

In one example, in the step (6) above, a quaternization temperature is 20-40°C. The concentration is 2-40 wt%, which can be trimethylamine or a combination of one or more of other tertiary amines that can be quaternizing.

In one example, in the step (7) above, the FeCl₂ solution has a concentration of 0.5-5 wt%, a transformation temperature of 25-60°C and transformation time of 5-30 min.

In one example, in the above step (7), the FeCl₂ solution can also be a combination of one or more of FeCl₂, FeCl₃, CrCl₃, SnCl₂, and SnCl₄.

In one example, in the above step (7), the soaking alkali solution can be a strongly alkaline inorganic solution such as NaOH and KOH, with a concentration of 0.5-10 wt%.

The preparation method of the monolithic bipolar membrane will be further described below by specific examples.

### Example 1:

A preparation method of a monolithic bipolar membrane was provided in this example, including the following steps:
Step 1: 20 g of styrene, 2.8 g of divinylbenzene and 0.02 g of azodiisobutyronitrile were prepolymerized at 60°C for 1 h, and cooled to terminate the reaction after the viscosity reached 300 dPa s, to obtain a membrane liquid;
Step 2: 600 ml of pure water was injected into a 1 L beaker, heated to 80°C in a thermostatic water bath, and kept warm for later use;
Step 3: the membrane liquid prepared in the Step 1 was heated to 80°C and changed into a liquid state, and a cut low-density polyethylene membrane was soaked in the membrane liquid, the soaked thin membrane was immediately taken out after being soaked for 5 min, and directly put into the hot water prepared in step 2) for a polymerization reaction, to obtain a basement membrane after being polymerized for 5 h;
Step 4: the basement membrane obtained in the Step 3 was soaked in chloromethyl ether, heated to 40°C, and reacted for 2 h with SnCl₄ as a catalyst, then the reacted thin membrane was taken out, and the residual chloromethylation solution was washed with water for later use;
Step 5: one side of the membrane obtained in the Step 4 was soaked in a dimethylamine solution, aminated for 130 min, and then washed with clear water additionally to be neutral, and the final membrane was the semi-anion membrane with an aminated layer thickness of about 42%;
Step 6: after the semi-anion membrane obtained in the Step 5 was dried at a low temperature, the aminated side was reacted with 96% sulfuric acid, heated to 60°C, and reacted for 75 min, at which time, about 40% of the thickness of the anion membrane was subjected to the sulfonation reaction (i.e., the thickness of the cation layer was 40%), and there were still some tertiary amine groups in this 40% area that were not completely sulfonated;
Step 7: one side of the membrane prepared in the Step 6 was quaternized additionally, and all unreacted parts in the membrane were grafted with a quaternary ammonium group, at which time, a monolithic bipolar membrane with a property of a bipolar membrane was prepared; and
Step 8: the membrane prepared in the Step 7 was directly soaked in a 2% FeCl₂ solution, and after being soaked for 1 h, taken out and washed with clear water, and then the membrane was soaked in an 8% sodium hydroxide solution, heated to 40°C and reacted for 25 minutes for transformation, and the monolithic bipolar membrane with a lower hydrolysis voltage was obtained after the transformation.

### Example 2:

A preparation method of a monolithic bipolar membrane was provided in this example, which was different from that of the Example 1 in that the Step 5 and Step 6 were different;
specifically, the thickness of the aminated layer in the Step 5 was controlled to be 52%, and the thickness of the cation layer in the Step 6 was controlled to be 50%;
other steps were the same as those in Example 1.

### Example 3:

A preparation method of a monolithic bipolar membrane was provided in this example, which was different from that of the Example 1 in that the Step 5 and Step 6 were different;
specifically, the thickness of the aminated layer in the Step 5 was controlled to be 62%, and the thickness of the cation layer in the Step 6 was controlled to be 60%;
other steps were the same as those in Example 1.

### Example 4:

A preparation method of a monolithic bipolar membrane was provided in this example, which was different from that of the Example 1 in that the Step 5 and Step 6 were different;
specifically, the thickness of the aminated layer in the Step 5 was controlled to be 72%, and the thickness of the cation layer in the Step 6 was controlled to be 70%;
other steps were the same as those in Example 1.

### Example 5:

A preparation method of a monolithic bipolar membrane was provided in this example, which was different from that of the Example 1 in that the Step 5 and Step 6 were different;
specifically, the thickness of the aminated layer in the Step 5 was controlled to be 82%, and the thickness of the cation layer in the Step 6 was controlled to be 80%;
other steps were the same as those in Example 1.

### Comparative Example 1:

A preparation method of a monolithic bipolar membrane was provided in this comparative example, which was different from that of the Example 2 in that
the membrane was not treated by the Step 8;
other steps were the same as those in Example 1.

### Comparative Example 2:

A preparation method of a monolithic bipolar membrane was provided in this comparative example, which was different from that of the Example 2 in that
the membrane was not treated by the Step 5;
other steps were the same as those in Example 1.

### Comparative Example 3:

A preparation method of a monolithic bipolar membrane was provided in this comparative example, which was different from that of the Example 2 in that
those substances were directly mixed to obtain the membrane liquid without prepolymerization in the Step 1; and the membrane was not treated by the Step 8;
other steps were the same as those in Example 1.

### Comparative Example 4:

A preparation method of a monolithic bipolar membrane was provided in this comparative example, which was different from that of the Example 2 in that
those substances were directly mixed to obtain the membrane liquid without prepolymerization in the Step 1;
other steps were the same as those in Example 1.

The following are the tests on the monolithic bipolar membranes of the Examples 1-5 and the Comparative Examples 1-4, respectively, and the test results are shown in Table 1.

**Table 1 Test results of monolithic bipolar membranes**

| No | Viscosity of membrane liquid | Step 5 | Thickness of cation layer | Step 8 | Transmembrane voltage | Stability |
|---|---|---|---|---|---|---|
| Example 1 | 300 dPa·s | With | 40% | With | 1.27 V | Stable |
| Example 2 | 300 dPa·s | With | 50% | With | 1.23 V | Stable |
| Example 3 | 300 dPa·s | With | 60% | With | 1.20 V | Stable |
| Example 4 | 300 dPa·s | With | 70% | With | 1.16 V | Stable |
| Example 5 | 300 dPa·s | With | 80% | With | 1.15V | Stable |
| Comparative Example 1 | 300 dPa·s | With | 50% | Without | 1.36 V | Stable |
| Comparative Example 2 | 300 dPa·s | Without | 50% | With | 1.32V | Stable |
| Comparative Example 3 | 1 mPa·s | With | 50% | Without | 1.41 V | Unstable |
| Comparative Example 4 | 1 mPa·s | With | 50% | With | 1.31 V | Unstable |

Among them, stability refers to whether each membrane can be processed into a bipolar membrane and has a stable transmembrane voltage during the preparation of the membrane. As can be seen from Table 1, the transmembrane voltage of the monolithic bipolar membrane in each example of the present invention is effectively reduced and has a stable transmembrane voltage, thereby being beneficial to reducing energy consumption and saving energy.

The above is only a detailed description of the preferred examples and principles of the present invention. For those of ordinary skill in the art, there will be some changes in the specific implementation according to the ideas provided by the present invention, and these changes should also be regarded as belonging to the protection scope of the present invention.

## Claims

1. A preparation method of a monolithic bipolar membrane with a low transmembrane voltage, comprising the following steps:
(1) prepolymerizing styrene, divinylbenzene and an initiator at a first temperature, cooling prepolymers to stop reaction when the prepolymers start to form a jelly shape, and preparing a membrane liquid; wherein a prepolymerization temperature is 60-80°C and prepolymerization time is 0.3-1.5 h;
(2) heating the membrane liquid to be under a liquid state, at which time infiltrating and impregnating a polyolefin thin membrane in the membrane liquid, and taking out an impregnated thin membrane from an organic mixture after being impregnated for a certain time;
(3) putting the impregnated thin membrane into water at a second temperature for a polymerization reaction, so as to prepare a basement membrane after the polymerization reaction is completed;
(4) chloromethylating the basement membrane, aminating one side of the basement membrane and preparing a semi-anion membrane;
in the step (4), the basement membrane is soaked in chloromethyl ether, heated to 30-45°C, and reacted for 2-8 h with SnCl₄ as a catalyst, then a reacted thin membrane is taken out, and a residual chloromethylation solution is washed with water for later use;
one side of a washed membrane is soaked in a 5-10 wt% dimethylamine solution, aminated for 1.5-4 h, and then washed with clear water additionally to be neutral to obtain the semi-anion membrane;
(5) partially sulfonating an aminated side of the semi-anion membrane additionally, and controlling a sulfonation reaction condition so that a certain amount of tertiary amine groups with abilities to catalyze hydrolytic dissociation are present in both of a cation layer and at an interface between an anion layer and the cation layer of the membrane after the sulfonation is completed;
(6) quaternizing one side of the membrane treated in the step (5) additionally, and grafting all unreacted parts in the membrane with a quaternary ammonium group, so that the reacted membrane has a property of a bipolar membrane; and
(7) soaking the bipolar membrane treated in the step (6) in a FeCl₂ solution additionally, and after soaking for a certain time, taking out the membrane, soaking and transforming the membrane in an alkaline solution, and preparing the monolithic bipolar membrane.

2. The preparation method according to claim 1, wherein in the step (1), a determination condition that the prepolymers start to form the jelly shape is that a viscosity is 200-500 dPa s.

3. The preparation method according to claim 1, wherein in the step (2), the membrane liquid has a heating temperature of 60-80°C, and impregnation time of 5-30 min.

4. The preparation method according to claim 1, wherein in the step (3), the polymerization reaction has a temperature of 60-80°C, and time of 4-10 h.

5. The preparation method according to claim 1, wherein in the step (5), after the semi-anion membrane is dried at a low temperature, the aminated side is reacted with sulfuric acid, heated to 50-80°C, and reacted for 1-4 h, so that an anion membrane is partially sulfonated.

6. The preparation method according to claim 1, wherein in the step (6), a quaternization temperature is 20-40°C.

7. The preparation method according to claim 1, wherein in the step (7), the FeCl₂ solution has a concentration of 0.5-5 wt%, a transformation temperature of 25-60°C and transformation time of 5-30 min.

8. A monolithic bipolar membrane prepared by the preparation method according to claim 1.
